# EUROPÄISCHE PATENTSCHRIFT

(11) **EP 1 764 488 B1**
(45) Date of publication and mention of the grant of the patent: **31.12.2008**
(21) Application number: 05020441.1
(22) Date of filing: 20.09.2005
(51) Int. Cl.: F01L 1/02, F02D 41/34, F16H 55/17

(54) **Angle measuring device**
Winkelmesseinrichtung
Dispositif de détection d'angle

(43) Date of publication of application: 21.03.2007
(73) Proprietor: Carl Freudenberg KG, 69469 Weinheim (DE)
(72) Inventor: Perret, Fabien, 52200 Langres (FR); Salagnac, Laurent, 52200 Langres (FR)

(56) References cited:
- EP-A- 1 512 845
- DE-A1- 3 210 914
- DE-A1- 19 907 959
- FR-A- 2 827 932
- US-A- 5 663 495
- US-A- 5 789 658

## Description

### Technical field

The invention relates to an angle measuring device, comprising a rotating device which is assigned signal-generating elements circumferentially, and at least one sensor for acquiring the signals.

### Prior art

Angle measuring devices of this type are already known from the prior art. These are used to acquire angular positions and rotational speeds, in particular of crankshafts and camshafts of internal combustion engines. In this case, the rotating device can be constructed as a multi-pole encoder with magnetized elastomer or as a gear wheel. In the case of a rotating device constructed as a gear wheel, the teeth and gaps of the gear wheel function as signal-generating elements, in each case a tooth and a gap being combined to form a unit. Such a gear normally comprises 58 teeth and gaps, which are positioned on the circumference of the gear wheel, following one another at intervals of 6°. At one point, by leaving out 2 teeth and by combining three adjacent gaps, a reference point is formed, which frequently corresponds to the top dead centre of a cylinder of an internal combustion engine.

The well-established geometry of a rotating device generates a signal of 57 regular periods of 6° and one irregular period of 18°. This irregular singularity allows generating an electric period of 18° that is used as position reference for engine management. The regular portions of the impulse wheel generates one impulse every 6° that is used by engine management to determine speed and shaft position. Disadvantage of such system is that speed information is lost in the irregular position of the rotating device.

### Summary of the invention

The invention is based on the object of providing an angle and speed measuring device enables determination of angular speed over the whole circumference of the measuring device.

This object is achieved by the features of Claim 1 and 11. The subclaims refer to advantageous refinements.

In order to achieve the object, the irregularly element has a double extension related to the regularly element. The simple geometry enables simply interpretation by engine management. The double extension of the irregular element can easily detect by the sensor so that the position of the rotating device can be located. Furthermore due to the double extension of the irregular element signals can be analyzed which are assigned in a same interval. For example the engine management uses signals in the extension of the regular or the irregular element for determining angle speed. Thereby a speed measurement can occur continuous over the whole circumference without lost of information.

The regularly element can have an extension of 6° and the irregularly element can have an extension of 12°. The extension of 6° enables a measurement with a good resolution whereby a simple sensor can be used.

Each element can be assigned respectively two electrical signal flanks. Thereby every element is assigned a rising and a falling flank. The engine management analyze if the respectively collected flank is a rising or a falling flank and decides if the respectively collected flank is used for determination speed or angle. Thereby the electrical signal flanks of the irregularly element can have an extension of 6°.

The rotating device can be formed by a gear wheel. Here, the gear wheel can be formed as a stamped part, as a sintered component or as a deep-drawn component and is robust with respect to external influences.

The elements can be formed by the teeth of the gear wheel. The acquisition of the teeth and the gaps can be carried out by means of an optical measuring method or an electromagnetic measuring method. In the case of electromagnetic measuring methods, the gear wheel forms a passive encoder which is registered by a passively or actively designed sensor. A passive sensor has an inductive measurement principle and an active sensor can be formed by a Hall sensor arrangement.

The teeth can have tops and bottoms whereby between the top and the bottom of the irregularly element a plateau can be arranged. The outcome of the plateau is a smaller width of the bottom and by measurement by sensor a steeply signal results. Thus the central position of the bottom can be detected more precisely.

The plateau can be arranged at half the tooth heigth. In this refinement is incidental a signal with a good measurably.

The plateau can have an increasing slope towards the bottom. Surprisingly this refinement improved once more the signal quality. The central position of the bottom can be detected once more precisely

The irregularly element can be assigned a TDC marking of an internal combustion engine. In this case, the TDC marking is preferably arranged in the centre of the bottom.

### Brief description of the drawing

Some exemplary embodiments will be explained in more detail below by using the figures, in which, in each case schematically;
Fig. 1 shows an angle measuring device according to the invention;
Fig. 2 shows in detail the irregular element.

### Implementation of the invention

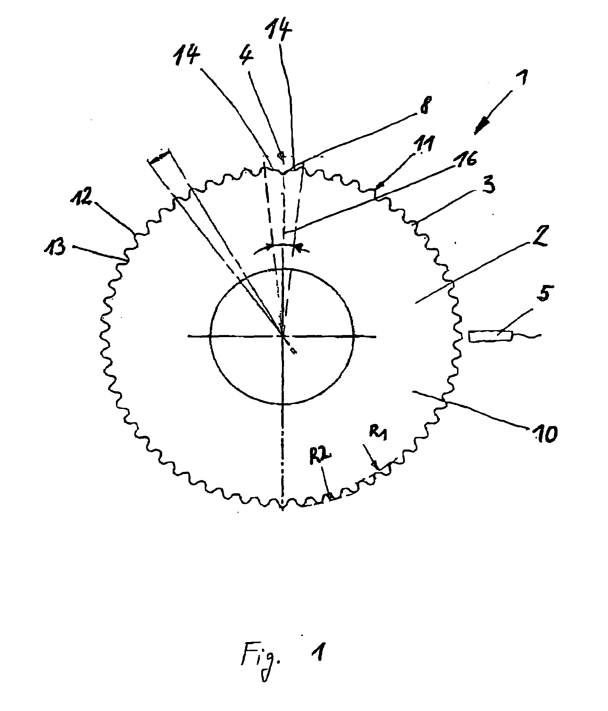

Figure 1 shows an angle measuring device 1 according to the invention, which comprises a rotating device 2 formed as a gear wheel 10. The gear wheel 10 is assigned signal-generating elements 3, 4 circumferentially, the signal-generating elements 3, 4 being formed by the teeth 11 of the gear wheel 10. The signals are acquired by means of a sensor 5, which can be formed as an inductive sensor or as a Hall sensor, In other embodiments, an optical measuring method can also be used. As compared with the other signal-generating elements 3, one element 4 is formed irregularly whereby the irregular element 4 has a double extension related to the regular element 3. In this embodiment the regular element 3 has an extension of 6° and the irregular element 4 has an extension of 12°. The irregular element 4 forms a reference point 16, which is assigned to the top dead centre of an internal combustion engine. The teeth 11 have tops 12 and bottoms 13. Between the top 12 and the bottom 13 of the irregular element 4 is arranged a plateau 14. The plateau 14 is arranged at half the tooth, heigth.
In other embodiments the position of the bottom 13 of the irregular element 4 is variable. The lowest position of the bottom 13 of the irregular element is equivalent to R1 and the highest position is equivalent to the product of R1 + (0,5 × (R2 - R1)). The position of the plateau 14 is between R1 and R2.

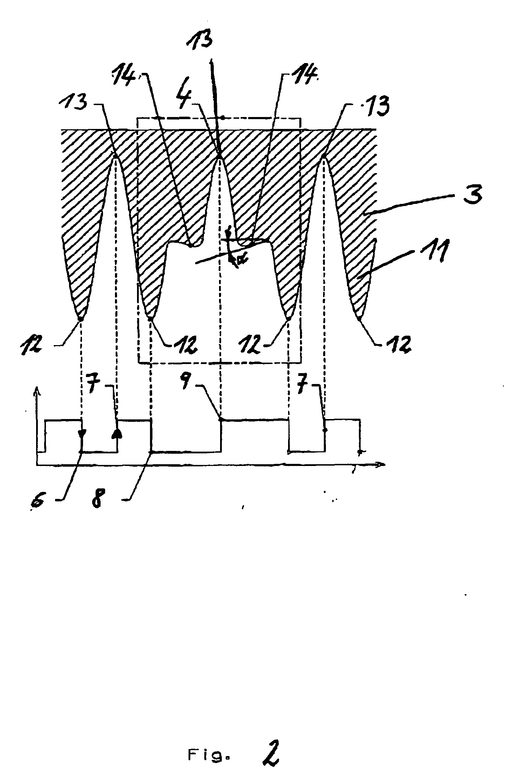

Figure 2 shows the irregular element 5 according to Figure 1 in detail. The signal-generating elements 3, 4 being formed by the teeth 11 of the gear wheel 10. The teeth 11 have tops 12 and bottoms 13. Between the top 12 and the bottom 13 of the irregular element 4 is arranged a plateau 14. The plateau 14 is arranged at half the tooth heigth. In this embodiment the plateau 14 has an increasing slope towards the bottom 13. The gradient angle α of the plateau 14 amounts to 20°. Each element 3, 4 are assigned respectively two electrical signal flanks 6, 7, 8, 9. A falling electrical flank 6, 8 is assigned to the top 12 and a rising flank is assigned to the bottom 13. The electrical signal flanks 8, 9 of the irregular element 4 have an extension of 6°.

## Claims

1. Angle measuring device (1), comprising a rotating device (2) formed by a gear wheel (10) which is assigned signal-generating regularly element (3) and at least one signal-generating irregularly element (4) and at least one sensor (5) for acquiring the signals, whereby the irregular element (4) has a double extension related to the regular element (3), whereby the elements (3, 4) are formed by the teeth (11) of the gear wheel (10), **characterized in that** the teeth (11) have tops (12) and bottoms (13) whereby between the top (12) and the bottom (13) of the irregular element (4) a plateau (14) is arranged.

2. Angle measuring device according to claim 1, **characterized in that** the regular element (3) has an extension of 6° and the irregular element (4) has an extension of 12°.

3. Angle measuring device according to claim 1 or 2, **characterized in that** each element (3, 4) are assigned respectively two electrical signal flanks (6, 7, 8, 9).

4. Angle measuring device according to claim 3, **characterized in that** the electrical signal flanks (8, 9) of the irregular element (4) have an extension of 6°.

5. Angle measuring device according to claim 1, **characterized in that** the plateau (14) is arranged at half the tooth heigth.

6. Angle measuring device according to claim 1 or 5, **characterized in that** the plateau (14) has an increasing slope towards the bottom (13).

7. Angle measuring device according to claims 1 to 6, **characterized in that** the irregular element (4) is assigned a TDC marking of an internal combustion engine.

## Patentansprüche

1. Winkelmeßeinrichtung (1), umfassend eine sich drehende Einrichtung (2), die durch ein Zahnrad (10) gebildet wird, dem ein signalerzeugendes regelmäßiges Element (3) und mindestens ein signalerzeugendes unregelmäßiges Element (4) und mindestens ein Sensor (5) zum Erfassen der Signale zugewiesen ist, wobei das unregelmäßige Element (4) ein in bezug auf das regelmäßige Element (3) doppeltes Ausmaß aufweist, wobei die Elemente (3, 4) durch die Zähne (11) des Zahnrads (10) gebildet werden, **dadurch gekennzeichnet, daß** die Zähne (11) obere Teile (12) und untere Teile (13) aufweisen, wobei zwischen dem oberen Teil (12) und dem unteren Teil (13) des unregelmäßigen Elements (4) ein Plateau angeordnet ist.

2. Winkelmeßeinrichtung nach Anspruch 1, **dadurch gekennzeichnet, daß** das regelmäßige Element (3) ein Ausmaß von 6° aufweist und das unregelmäßige Element (4) ein Ausmaß von 12° aufweist.

3. Winkelmeßeinrichtung nach Anspruch 1 oder 2, **dadurch gekennzeichnet, daß** jedem Element (3, 4) jeweils zwei elektrische Signalflanken (6, 7, 8, 9) zugewiesen sind.

4. Winkelmeßeinrichtung nach Anspruch 3, **dadurch gekennzeichnet, daß** die elektrischen Signalflanken (8, 9) des unregelmäßigen Elements (4) ein Ausmaß von 6° aufweisen.

5. Winkelmeßeinrichtung nach Anspruch 1, **dadurch gekennzeichnet, daß** das Plateau (14) bei der Hälfte der Zahnhöhe angeordnet ist.

6. Winkelmeßeinrichtung nach Anspruch 1 oder 5, **dadurch gekennzeichnet, daß** das Plateau (14) in Richtung des unteren Teils (13) eine zunehmende Steigung aufweist.

7. Winkelmeßeinrichtung nach einem der Ansprüche 1 bis 6, **dadurch gekennzeichnet, daß** dem unregelmäßigen Element (4) eine TDC-Markierung eines Verbrennungsmotors zugwiesen ist.

## Revendications

1. Dispositif de mesure d'angle (1) comprenant un dispositif rotatif (2) formé par une roue dentée (10) à laquelle est affecté un élément régulier (3) générateur de signal et au moins un élément irrégulier (4) générateur de signal et au moins un capteur (5) pour acquérir les signaux, l'élément irrégulier (4) ayant une double extension par rapport à l'élément régulier (3), les éléments (3, 4) étant formés par les dents (11) de la roue dentée (10), **caractérisé en ce que** les dents (11) possèdent des sommets (12) et des talons (13), un plateau (14) étant disposé entre le sommet (12) et le talon (13) de l'élément irrégulier (4).

2. Dispositif de mesure d'angle selon la revendication 1, **caractérisé en ce que** l'élément régulier (3) présente une extension de 6° et l'élément irrégulier (4) une extension de 12°.

3. Dispositif de mesure d'angle selon la revendication 1 ou 2, **caractérisé en ce que** deux fronts de signal électrique (6, 7, 8, 9) sont respectivement associés à chaque élément (3, 4).

4. Dispositif de mesure d'angle selon la revendication 3, **caractérisé en ce que** les fronts de signal électrique (8, 9) de l'élément irrégulier (4) ont une extension de 6°.

5. Dispositif de mesure d'angle selon la revendication 1, **caractérisé en ce que** le plateau (14) est disposé à la moitié de la hauteur de la dent.

6. Dispositif de mesure d'angle selon la revendication 1 ou 5, **caractérisé en ce que** le plateau (14) présente une pente croissante en direction du talon (13).

7. Dispositif de mesure d'angle selon les revendications 1 à 6, **caractérisé en ce qu'**un marquage de PMH d'un moteur à combustion interne est affecté à l'élément irrégulier (4).
